# EUROPÄISCHE PATENTSCHRIFT

(11) **EP 1 746 920 B1**
(45) Veröffentlichungstag und Bekanntmachung des Hinweises auf die Patenterteilung: **14.04.2010**
(21) Anmeldenummer: 05753053.7
(22) Anmeldetag: 17.05.2005
(51) Int. Cl.: A47J 31/44

(54) **VORRICHTUNG ZUM AUFSCHÄUMEN VON MILCH MIT EXTERNER MILCHANSAUGUNG**
DEVICE FOR FOAMING MILK, COMPRISING EXTERNAL SUCTION EQUIPMENT
DISPOSITIF POUR FAIRE MOUSSER DU LAIT AU MOYEN D'UNE UNITE D'ASPIRATION DE LAIT EXTERNE

(30) Priorität: 18.05.2004 DE 102004025038; 01.02.2005 DE 102005004852; 06.03.2005 DE 102005010599
(43) Veröffentlichungstag der Anmeldung: 31.01.2007
(73) Patentinhaber: Nestec S.A., 1800 Vevey (CH)
(72) Erfinder: EIMER, Klaus, 40883 Ratingen (DE); PATZIG, Dieter, 40882 Ratingen (DE)
(74) Vertreter: Rupp, Christian
(86) Internationale Anmeldenummer: PCT/DE2005/000898
(87) Internationale Veröffentlichungsnummer: WO 2005/112717

(56) Entgegenhaltungen:
- EP-A- 1 374 748
- DE-A1- 4 445 436
- US-A1- 2002 134 248

## Beschreibung

Die Erfindung betrifft eine Vorrichtung zum Aufschäumen von Milch mit externer Milchansaugung nach dem Oberbegriff des Anspruchs 1.

Derartige Vorrichtungen sind als Zusatzeinrichtung zum Anschluss an die mit einer Dampfdüse versehene Dampfzuleitung von Espresso-Maschinen oder ähnliche Haushaltsmaschinen bekannt, wobei die Vorrichtung mit einer zur Erzeugung von Unterdruck in einem Unterdruckraum mittels Dampfströmung vorgesehenen Düsenanordnung ausgerüstet ist und getrennt oder gemeinsam geführte und mit dem Unterdruckraum verbundene Ansaugleitungen für Milch und Luft oder Milch-Luft-Gemisch und eine Abgabeöffnung zur Abgabe des erzeugten Dampf-Milch-Luft-Gemisches besitzt und die Milchansaugleitung in die zu behandelnde Milch eintauchbar ist, die sich in dem zur Aufnahme des Dampf-Milch-Luft-Gemisches vorgesehenen Behälter oder einem getrennten Behälter befindet.

Die Europäische Patentschrift EP 1 115 317 A1 beschreibt eine derartige Vorrichtung, bei der über eine externe Milchzuleitung bevorzugt aus einem separaten Milchbehälter angesaugter unbehandelter Milch in einer Vormischkammer Luft zugemischt wird und das Milch-Luft-Gemisch der Unterdruckkammer einer Düsenanordnung zuströmt und vom den Unterdruck erzeugenden Dampfstrom über eine Emulgierkammer und Abgabeöffnung einem Aufnahmebehälter für den erzeugten Milchschaum zufließt.

Insbesondere für Haushalt-Espressomaschinen sind zahlreiche weitere Vorrichtungen zur Erzeugung von Milchschaum entwickelt und bekannt geworden, die als Zusatzeinrichtungen an die mit einer Dampfdüse versehene Dampfzuleitung der Espressomaschinen anschließbar und aus einem mit Milch gefüllten separaten Milchbehälter Milch ansaugen und den erzeugten Milchschaum aus einer Abgabeöffnung abgeben. Diese Vorrichtungen erzeugen auch den gewünschten Milchschaum in hoher Qualität, besitzen jedoch den Nachteil, dass sie nach Benutzung gereinigt werden müssen. Als einfachstes Reinigungsverfahren wird von den Herstellern vorgeschlagen, den Milchbehälter mit Wasser zu füllen und die Vorrichtung an Stelle der Milch zur Reinigung mit Wasser zu betreiben und damit zu spülen. Auch achten die Hersteller auf relativ einfache Demontierbarkeit ohne die Benutzung von Werkzeugen.

Sowohl der Spülvorgang als auch das Reinigen nach Demontage der Vorrichtung sind zeitaufwendig. Wird die Reinigung nicht unmittelbar sofort nach Benutzung durchgeführt, trocknen Milchreste bedingt auch durch die vom Dampf erzeugte hohe Temperatur einiger Teile schnell an und sind danach nur noch aufwendig abzureinigen.

Die Reinigung erfolgt üblicherweise nicht unmittelbar nach der Benutzung der Vorrichtung, da der Benutzer - bedingt auch durch die Anwesenheit weiterer Personen - eher auf den Genuss des erzeugten Cappuccino oder anderer Kaffee-Milchschaum-Getränke als auf die Reinigungsaufgabe konzentriert ist. Außerdem ist oft noch unklar, ob nicht in unmittelbarer Zeitfolge eine weitere Benutzung erfolgten wird. Erfolgt die Reinigung z.B. erst am nächsten Tag, so sind die Milchreste inzwischen verkrustet und nur noch schwer abzureinigen. Die nicht oder nur aufwendig abzureinigen Milchreste im Inneren der Düsenanordnung und der Milchansaugleitung werden dann zu einem Hygieneproblem.

In der Patentliteratur findet sich als WO 2004/054413 auch eine Vorrichtung zum Aufschäumen von Milch, die im wesentlichen aus einem einstückigen Kunststoffkörper und einem angesetzten Milchansaugrohr besteht, das auch als Trinkhalm ausgeführt sein kann. Diese Vorrichtung stellt zwar gegenüber dem vorherigen Stand der Technik eine deutliche Verbesserung dar, ist jedoch noch nicht in die Praxis eingeführt und erscheint immer noch als zu schwierig zu reinigen und als Wegwerfartikel als zu aufwendig und teuer.

Eine weitere Vorrichtung ist aus der US 2002/0 134 248 A bekannt.

Aufgabe der Erfindung ist es, eine Vorrichtung zum Aufschäumen von Milch mit externer Milchansaugung als Zusatzeinrichtung zum Anschluss an die mit einer Dampfdüse versehene Dampfzuleitung von Espresso-Maschinen oder ähnlichen Haushaltmaschinen zu schaffen, deren Betrieb ohne aufwendige Reinigung möglich ist.

Diese Aufgabe wird erfindungsgemäß gelöst durch eine Vorrichtung mit den Merkmalen des Anspruch 1. Vorteilhafte Weiterbildungen sind in den jeweils abhängigen Ansprüchen angegeben.

Dazu lehrt die Erfindung, dass die Vorrichtung mindestens aus einem an die Dampfzuleitung mit Dampfdüse anschließbaren Festteil und einem am Festteils angeordneten und mit diesem leicht auswechselbar verbindbaren Wegwerfteil zusammengesetzt ist, und das Wegwerfteil mindestens aus einer im Bereich des Festteils angeordneten Düsenanordnung mit Unterdruckraum und Ansaugleitungen sowie einem Milchansaugrohr und einem Milchschaumabführrohr mit Mischraum besteht. Wesentlicher Teil der Erfindung ist, dass Milchansaugrohr und Milchschaumabführrohr und in besonderen Ausführungsformen der Erfindung auch die Düsenanordnung im Wesentlichen als durch Strangpressen erzeugbare und bevorzugt durch thermische Verformung konfektionierbare dünnwandige Kunststoffrohre ausgebildet sind. Der Querschnitt der Rohre kann kreisrund oder in einer anderen Form ausgeführt sein.

Für die Ausbildung der Vorrichtung mit Wegwerfteil ist es wichtig, dass dieses extrem kostengünstig zu fertigen ist. Hier liegen gute Erfahrungen mit Trinkhalmen vor, die durch Strangpressen als dünnwandige Kunststoffrohre aus Polypropylen oder anderen Kunststoffen, vorzugsweise thermoplastischen Kunststoffen hergestellt sind. In demselben oder einem zusätzlichen Arbeitsgang lassen sich diese dünnwandigen Rohre - ähnlich den Trinkhalmen - kostengünstig bereichsweise mit einem Wellrohrprofil oder anderen Profilen oder Ausbeulungen ausrüsten. Dies begünstigt für besondere Ausbildungsformen der Erfindung die Ausbildung biegbarer Rohrbereiche und bereichsweiser Durchmesserveränderungen oder von Einbeulungen zur teilweisen Absperrung oder die Ausbildung von Düsenanordnungen sowie zum Zusammenfügen der Rohre. Milchansaugrohr und Milchschaumabführrohr haben Durchmesser, die im Bereich üblicher Trinkhalme von ca. 3 mm bis 8 mm oder geringfügig darüber bis 15 mm liegen.

In weiterer Ausbildung der Erfindung wird die Düsenanordnung mit Unterdruckraum und mindestens Teilen der Ansaugleitungen für Milch oder für Milch und Luft oder für Milch Luft-Gemisch von mindestens einem, bevorzugt durch Kunststoffspritzguss erzeugbaren Düsenkörper gebildet, der an seinem oberen Ende an dem Festteil befestigt ist und Anschlüsse für die Rohre besitzt. Düsenkörper dieser Art sind durch Spritzguss in Mehrfachformen sehr kostengünstig zu fertigen, ebenfalls, z.B. aus Polypropylen. Sie können zur Vermeidung einer wegen erforderlicher Schieber aufwendigen Formtechnik auch zweiteilig ausgeführt sein.

Die Düsenanordnung mit Unterdruckraum und mindestens Teilen der Ansaugleitungen sind in einer weiteren besonderen Ausbildung der Erfindung im Wesentlichen von einem durch Strangpressen erzeugbaren dünnwandigen Mehrfachrohrabschnitt bestehend aus mindestens zwei achsparallel zueinander angeordneten und mit mindestens einem gemeinsamen Wandelement miteinander verbundenen Kunststoffrohren gebildet, wobei an eines der Rohre zumindest das Milchansaugrohr anschließbar ist, und ein anderes der Rohre zumindest der Zufuhrung des Dampfstromes und Abführung der Milchschaumstromes dient. Die Düsenanordnung mit Unterdruckraum und mindestens Teile der Ansaugleitungen können in einer bevorzugten Ausführungsform der Erfindung aus durch thermische Verformung erzeugbaren Ein- und Ausbeulungen am Mehrfachrohrabschnitt gebildet werden. Damit entfallen die Herstellaufwendungen für den Düsenkörper und es ergibt sich eine insgesamt sehr kostengünstige Lösung.

Auch die Verwendung eines thermoplastisch aus einem dünnwandigen Rohr ähnlich dem Milchansaugrohr und Milchschaumabführrohr erzeugten und im Milchschaumabführrohr befestigten Rohrabschnitts liegt im Rahmen der Erfindung. Dieser bildet auf seiner Außenseite zur Wandung des Milchschaumabführrohres hin einen Ringraum, in den der Milch- und der Luftstrom einströmen, sich vermischen und danach in den Unterdruckraum eintreten. Der Rohrabschnitt wird bevorzugt in einem der Rohre des Mehrfachrohrabschnitts angeordnet.

Das Wegwerfteil wird in bestimmten Ausfiihrungsformen aus mehreren Einzelteilen gebildet, wobei die Einzelteile zweckmäßigerweise mittels einer Montagemaschine sehr kostengünstig zusaimnenzufügen und durch Klemmen, Kleben, punktuelle Warmverformung oder Schweißen z.B. durch Ultraschall oder Laser mit einander zu verbinden sind.

Die Düsenanordnung zur Erzeugung des zum Ansaugen von Milch und Luft erforderlichen Unterdrucks kann aus einer Venturidüse mit Unterdruckraum im engsten Querschnitt oder aus einer Freistrahldüse bestehen, wie sie z.B. bei Sprayflaschen zum Einsatz kommt, wobei der Freistrahl bei sprungartiger Querschnittsaufweitung von der Düse zum Unterdruckraum in seinem Außenbereich eine Ansaugung bewirkt.

Die Ansaugleitungen für Milch und Luft können im Rahmen der Erfindung auf ganz unterschiedliche Weise geführt sein. Vorteilhaft ist es dabei, wenn die Luft zunächst der Milch beigemischt wird, bevor die Milch vom Dampfstrahl angesaugt wird.

Bei Espresso-Maschinen bildet in vielen Fällen die Dampfdüse den Abschluss der Dampfzuleitung. In diesem Fall ist es in einer besonderen Ausführungsform der Erfindung zweckmäßig, das Festteil an dieser Dampfdüse zu fixieren. Dabei ist es zur einfachen Montag möglich, das Festteil aus einem elastischen Werkstoff herzustellen. Dieser vereinfacht dann auch das Befestigen des Wegwerfteils am Festteil. Das Festteil lässt sich jedoch in einer anderen Ausbildungsform der Erfindung auch mit einer Klemmvorrichtung am Festteil anklemmen, wobei in weiterer Ausbildung der Erfindung Wegwerfteil über ein rohrförmige Ausbildung des Festteils geschoben und geklemmt wird.

In besonderen Ausbildungsformen der Erfindung ist die Luftströmung in das Zuführrohr im Bereich des Festteils oder des Milchansaugrohres absperrbar. Damit kann der Benutzer wählen, ob er die Milch erhitzen und schäumen oder nur erhitzen will. In weiterer Ausbildung der Erfindung ist auch der Milchstrom bzw. der Milch-Luft-Strom mengenmäßig einstellbar.

In bevorzugter Ausführungsform der Erfindung wird der Luftstrom über eine im Bereich des Anschlusses des Milchansaugrohres an den Düsenkörper in der Wandung des Milchansaugrohres angeordneten Luftdrossel zuführbar ist. In weiterer Ausbildung der Erfindung besteht die Luftdrossel aus einer bevorzugt kreisförmig ausgebildeten Öffnung oder Ausnehmung in der Wandung, deren Strömungsquerschnitt einem Durchmesser von 0,2 mm bis 0,8 mm einer kreisförmigen Öffnung entspricht, bevorzugt 0,3 bis 0,6 mm. Ausnehmungen bzw. Öffnungen mit nicht kreisförmiger Form (z.B. ellipsenförrnige oder quadratische Form) benötigen also einen entsprechend dimensionierten Querschnitt. In bevorzugter Ausbildungsform der Erfindung ist die Öffnung durch thermische Verformung des dünnwandigen Milchansaugrohres herstellbar (also z.B. durch Eindrücken eines aufgeheizten Domes mit entsprechendem Durchmesser).

In weiteren besonderen Ausführungsformen der Erfindung ist in das Wegwerfteil ein Geschmackspender integriert, dessen Geschmacksstoffe durch die Dampfströmung und/oder die Milchströmung gelöst und in den Milchschaum getragen werden. Dabei kann es sich z.B. um eine Geschmacksveränderung der Milch bzw. des Milchschaums zu einem Kaffee "Wiener Melange" handeln.

Aufgabe des bei bestimmungsgemäßer Benutzung nicht mit Milch benetzten erfindungsgemäßen Festteils ist es, das Wegwerfteil möglichst einfach, klein und kostengünstig und seine Verbindbarkeit mit der Dampfzuleitung möglicht komfortabel gestalten zu können. Das Festteil kann dagegen eher aufwendig gestaltet werden, da es durch Milch nicht benetzt für Dauerbenutzung ausgelegt ist. Ein weiterer Vorteil des Festteils ist es, dass die Wegwerfteile für die Anwendung an unterschiedlichen Espresso-Automaten identisch gestaltet werden können, da die Unterschiede zwischen den Espresso-Automaten von den dann unterschiedlichen Festteilen aufgefangen werden. Dies vereinfacht die Vermarktung der Wegwerfteile.

Stehen jedoch Espresso-Automaten in großer Zahl mit identischen Anschlussmaßen an der mit Dampfdüse ausgerüstete Dampfzuleitung für die Ausrüstung mit Einmal-Aufschäumdüsen bereit, so ist der Einsatz von Festteilen aufwendig, da diese ja alle identisch ausgeführt sind.

Daher liegt es auch im Rahmen der Erfindung, das Festteil in die Dampfzuleitung bzw. in die den Abschluss der Dampfzuleitung bildende Dampfdüse zu integrieren und daher die Dampfzuleitung (z.B. als Rohr ausgeführt) bzw. die Dampfdüse als Abschluss der Dampfzuleitung für die Ankopplung des Wegwerfteils geeignet zu gestalten. Es gibt in dieser besonderen Ausführungsform also kein Festteil als Einzelteil. Dazu kann es vorteilhaft sein, das mit einem Düsenkörper ausgestattete Wegwerfteil mit einem zusätzlichen Dampfrohr auszurüsten, das die Dampfzuführung von Dampfzuleitung/Dampfdüse zum Düsenkörper ermöglicht.

Das den Dampfstrom der Düsenanordnung zuführende Kunststoffrohr (bevorzugt Dampfrohr oder Mehrfachrohrabschnitt) besitzt dazu an seinem oberen Ende mit Dampfzutritt eine Gestalt, die eine schnell herstellbare und wieder lösbare Verbindung mit der Dampfzuleitung bzw. mit der Dampfdüse gestattet. In bevorzugter Ausführungsform ist das Dampfrohr bei Anschluss an die Dampfdüse der Espresso-Maschine als Abschluss der Dampfzuleitung im Bereich des Anschlusses aufgeweitet. Diese Aufweitung kann entfallen, wenn die Dampfzuleitung selbst als Festteil ausgebildet ist. Der Innendurchmesser des Dampfrohres im Bereich des Anschlusses entspricht in bevorzugter Ausführungsform annähernd dem Außendurchmesser der Dampfzuleitung bzw. der Dampfdüse und wird bevorzugt mittels Rastring/Rastnut unter Nutzung der elastischen Dehnbarkeit des Dampfrohres am Festteil fixiert.

Die Erfindung wird nachfolgend anhand von Ausflihrungsbeispielen näher erläutert. Die Figuren zeigen in schematischer Darstellung:
- Fig. 1: erfindungsgemäße Vorrichtung mit getrennt dargestelltem Festteil und Wegwerfteil unter Dampfzuleitung mit Dampfdüse, mit getrennten Be- hältern für Milch und Milchschaum
- Fig. 2: Schnitt durch den Mehrfach-Rohrabschnitt nach Fig. 1
- Fig. 3: Detail zu Fig. 1
- Fig. 4: andere erfindungsgemäße Ausführung von Festteil und Wegwerfteil mit Düsenkörper, Festteil an Dampfdüse montiert, Wegwerfteil separat dar- gestellt
- Fig. 5: Detail zu Fig. 4
- Fig. 6: weitere Ausfiihrungsform eines erfindungsgemäßen Wegwerfteils, ohne Festteil dargestellt
- Fig. 7: weitere Ausfiihrungsform einer erfindungsgemäßen Vorrichtung mit zu- sätzlichem Dampfrohr aufgesteckt auf eine als Festteil wirkende Dampf- düse
- Fig. 8: Wegwerfteil nach Fig. 7, aufsteckbereit auf Dampfdüse

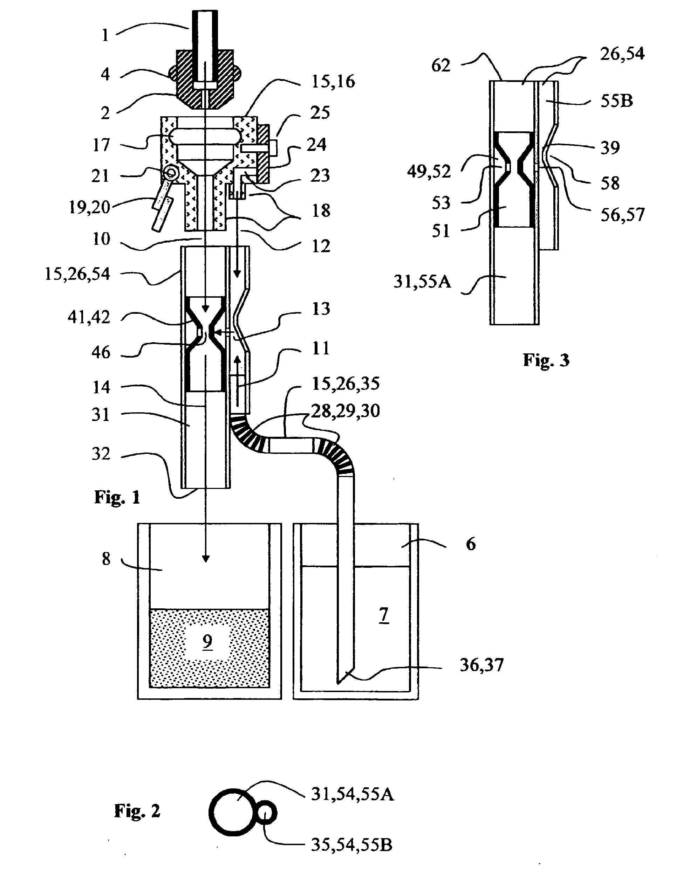

**Fig. 1** zeigt ein Ausführungsbeispiel einer erfindungsgemäßen Vorrichtung (15) mit getrennten Festteil (16) und Wegwerfteil (26) unter Dampfzuleitung (1) mit Dampfdüse (2) dargestellt. In **Fig. 2** ist für die Ausführung nach Fig. 1 ein Schnitt durch die beiden Rohre (55A, 55B) des Mehrfach-Rohrabschnitts (54) dargestellt, den **Fig. 3** im Detail zeigt. Das Milchansaugrohr (35) ist in einen Milchbehälter (6) eingetaucht, der teilweise mit der anzusaugenden Milch (7) gefüllt ist. Der Die Vorrichtung (15) über die Abgabeöffnung (32) verlassende Milchschaumstrom (14) gelangt in den separaten Milchschaumbehälter (8), der teilweise mit aufgeschäumter Milch (9) gefüllt ist.

Das Festteil (16) ist vorzugsweise aus elastischem Kunststoff gefertigt, um es auf einfache Weise mit der Dampfdüse (2) der Dampfzuleitung (1) verbinden zu können. Dazu ist der Körper der Dampfdüse (2) mit einem Rastring (4) ausgestattet, in den die Rastnut (17) des Festteils (16) einrastet. Die schnell und einfach herstellbare und lösbare Verbindung zwischen Festteil (16) und Wegwerfteil (26) wird über eine Klemmvorrichtung (19) gesichert, wozu das Wegwerfteil (26) auf rohrförmige Ausbildungen (18) des Festteils (16) aufschiebbar ist. Diese Klemmvorrichtung (19) besteht in diesem Ausführungsbeispiel aus mindestens einer in einem Lager (21) geführten und z.B. durch eine nicht dargestellte Klemmfeder (22) angedrückte Klemmbacke (20), die in Fig. 1 im abgehobenen Zustand dargestellt ist. Nach aufschieben des Wegwerfteils (26) auf das Festteils (16) wird die Klemmbacke (20) zur Anlage gebracht.

Das Wegwerfteil (26) besteht aus einem Mehrfach-Rohrabschnitt (54) mit zwei Rohren (55), wobei das eine Rohr (55A) als Milchschaumabführrohr (31) und zur Befestigung am Festteil (16) dient und das andere Rohr (55B) zur Zuführung des Luftstromes (12) und des Milchstromes (11) über das am Mehrfach-Rohrabschnitt (54) angebrachte Milchansaugrohr (35). Das Rohr (55B) ist mit einer durch z.B. thermoplastische Verformung erzeugten Einbeulung (58) versehen, welche einen Teil der Luftansaugleitung (39) bildet, den Luftstrom (12) mengenmäßig begrenzt und ihn dem Milchstrom (11) zuführt. Über die Wandöffnung (57) in dem die beiden Rohr (55A, 55B) verbindenden gemeinsamen Wandelement (56) gelangt der Milch-Luft-Strom (13) in den Ringraum (52) des Rohrabschnitts (51), der in dem Rohr (55A) befestigt ist, und aus diesem als Mischraum (49) dienenden Ringraum (52) über die Ansaugöffnung (53) in den Unterdruckraum (46) der als Venturidüse (42) ausgebildeten Düsenanordnung (41).

Das Milchansaurohr (35) ist in diesem Ausführungsbeispiel der Erfindung in zwei gewellten Rohrlängen (30) mit einem Wellprofil (28) mit einer Vielzahl von Wellen (29) ausgestattet, um es leicht verformbar zu machen. Dadurch ist die Position seines mit einer Abschrägung (37) versehenen Milcheintritts (36) an unterschiedliche Anordnungen von Milchbehälter (6) und Milchschaumbehälter (8) anpassbar, also auch der Abstand zwischen Milcheintritt (36) und Abgabeöffnung (32).

Das Festteil (16) ist mit einer betätigbaren Absperrung (24) für seine Luftführung (23) ausgerüstet, die in diesem Ausführungsbeispiel in einem Lager (25) drehbar angeordnet ist. Damit kann der Betreiber der Vorrichtung wählen zwischen den Betriebsstellungen "Milch schäumen und erhitzen" oder "Milch erhitzen".

Die Dampfzuleitung (1) ist Teil einer mit einem Dampferzeuger ausgerüsteten nicht dargestellten Maschine zur Erzeugung von Kaffee, Espresso oder Cappuccino. Die erfindungsgemäße Vorrichtung (15) ist Zubehörteil zu Maschinen dieser Art. Der Dampfstrom (10) tritt über die Dampfdüse (2) in das Festteil (16) ein und strömt zur Düsenanordnung (41) des Wegwerfteils (26). Die Düsenanordnung (41) ist in dem dargestellten Ausführungsbeispiel mit einer Venturidüse (42) ausgebildet, könnte jedoch auch als Freistrahldüse (44) aufgebaut sein, oder in an sich bekannter Weise in anderen Ausbildungsformen der Erfindung als Mehrfachdüse mit hintereinander geschalteten Durchmessersprüngen und Emulgierkammern.

Das Festteil (16) ist für fortdauernde Verwendung ausgelegt und kann daher aus hochwertigem Werkstoff in aufwendiger Fertigungsweise hergestellt werden. Das Wegwerfteil (26) dagegen soll nach einigen Anwendungen, z.B. täglich, gegen ein neues ausgetauscht werden, um aufwendige Reinigung und unhygienische Betriebsweise mit nicht vollständig gereinigten Teilen zu vermeiden. Daher besteht das Wegwerfteil (26) in dieser Ausführungsform der Erfindung aus extrem kostengünstig herstellbaren dünnwandigen Kunststoffrohren wie sie, auch einschließlich Wellprofil (30), z.B. für Trinkhalme Verwendung finden. Die Herstellung erfolgt üblicherweise durch Strangpressen, eventuell mit anschließende thermoplastischer Verformung, z.B. für Wellprofile (30). Die Wandstärke der Rohre (51, 55, 35) beträgt typischerweise 0,1 bis 0,2 mm höchstens 0,3 mm. Das Milchansaugrohr (35) hat typischerweise einen Durchmesser von 3 bis 6 mm höchsten 8 mm, das Milchschaumabführrohr (31) von 7 bis 10 mm höchsten 15 mm.

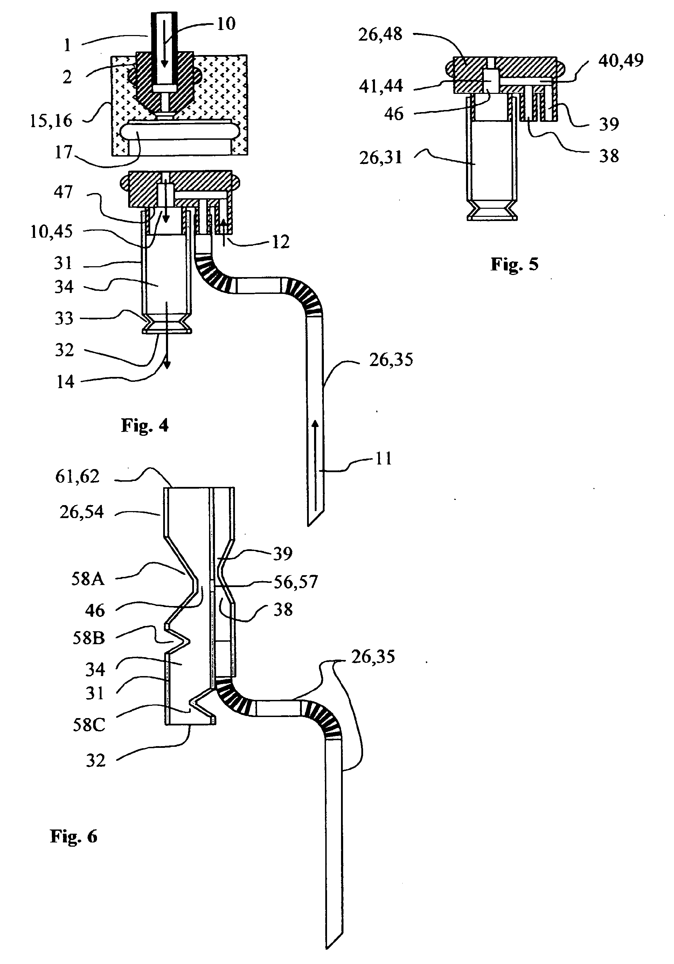

**Fig. 4** zeigt eine weitere Ausführungsform der erfindungsgemäßen Vorrichtung (15), **Fig. 5** einen Ausschnitt aus Fig. 4. Das Festteil (16) besteht vorzugsweise aus elastischem Kunststoff, um es einfach an der Dampfdüse (2) befestigen zu können. Jedoch liegen auch andere Verbindungsarten z.B. mit starren Festteilen (16) und elastischen Dichtringen im Rahmen der Erfindung. Das getrennt dargestellte Wegwerfteil (26) besteht aus einem Düsenkörper (48), der zur Montage am Festteil (16) in dessen Rastnut (17) einrastet, dem am Düsenkörper (48) aufgesteckten und dort mit bekannten Befestigungstechniken befestigten Milchschaumabführrohr (31) und Milchansaugrohr (35). Die Düsenanordnung (41) besteht in diesem Ausführungsbeispiel aus einer Freistrahldüse (44), in deren Unterdruckraum (46) die Milch-Luft-Ansaugleitung (40) mündet, die in deren Verlauf auch ein nicht besonders dargestellter Mischraum (49) integriert ist. Abweichend von der Darstellung in Fig. 3 ermöglicht der Düsenkörper (48) durch seine räumliche Ausdehnung die optimale Ausbildung eines Mischraumes (49). Der Freistrahl (45) mit Unterdruckbildung entsteht dadurch, dass die Wandung (47) des Unterdruckraumes (46) im Bereich der Freistrahldüse (44) unter einem so großen Winkel bis annähernd senkrecht zur Richtung des Dampfstromes (10) angeordnet ist, dass die Strömung sich nicht an die Wandung (47) anlegen kann und von ihr ablöst.

Das Milchschaumabführrohr (31) ist in diesem Ausführungsbeispiel im Bereich der Abgabeöffnung (32) mit einer Verengung (33) versehen, welche die Durchmischung im Mischraum (34) begünstigt. In ähnlicher Weise lassen sich in anderen Ausführungsformen der Erfindung im Mischraum (34) nicht dargestellte mehrstufige Durchmessererweiterungen des Milchschaumabführrohres (31) verwirklichen.

Das Düsenkörper (48) dieser Ausführungsform der Erfindung ist durch Kunststoffspritzguss dann kostengünstig herstellbar, wenn die Spritzgussform als Vielfachwerkzeug ohne Kernziehvorrichtungen ausgebildet werden kann. Dazu wird das Düsenkörper (48) zweckmäßigerweise in zwei Teilen gefertigt, was eine Kernziehvorrichtungen für die Ansaugleitungen (38, 39, 40) vermeiden lässt. Die beiden Teile werden zusammengefügt, z.B. verschweißt oder verklebt. Die Verbindung zwischen Düsenkörper (48) und Milchschaumabführrohr (31) und Milchansaugrohr (35) erfolgt durch Kraftschluss aus der Elastizität der Rohre (31, 35), oder durch punktweißes Kleben oder Schweißen (z.B. mit Ultraschall) oder durch thermisches Einbeulen der Rohre (31, 35) in jeweils eine entsprechende Auswölbung des Düsenkörpers (48) oder durch andere bekannte Maßnahmen der Verbindungstechnik.

Im Rahmen der Erfindung liegt es auch, den Düsenkörper (48) mit anderen Düsenanordnungen (41), anderen Verbindungsformen zwischen Festteil (16) und Wegwerfteil (26) usw. auszurüsten.

In **Fig. 6** ist in einer weitere Ausfiihrungsform der erfindungsgemäßen Vorrichtung (15) ein Wegwerfteil (26) dargestellt, das aus einem Mehrfachrohrabschnitt (54) besteht, in dem das Milchansaugrohr (35) befestigt ist und dessen Düsenanordnung - hier schematisch dargestellt - ausschließlich durch Ein- und Ausbeulungen (58) erzeugbar sind. Die Venturidüse (42) wird durch die Einbeulung (58A) im Milchschaumabführrohr (31) des Mehrfach-Rohrabschnitts (54) gebildet. Die Luftansaugleitung (39) und Milchansaugleitung (38) sind wie im Ausfiihrungsbeispiele zu Fig. 1 ausgeführt. Der Milch-Luft-Strom (13) strömt dem Unterdruckraum (46) über die Wandöffnung (57) in dem gemeinsamen Wandelement (56) zu. Im Bereich des Mischraumes (34), auch Emulgierraum genannt, sind weitere Einbeulungen (58B, 58C) angebracht, um die Durchmischung zu verbessern.

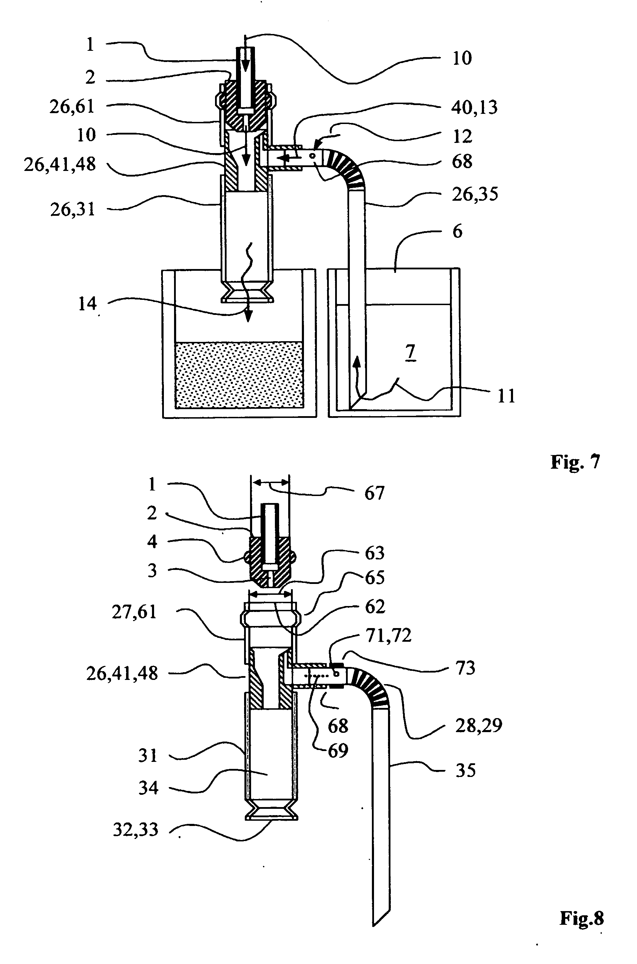

**Fig. 7** und **Fig. 8** zeigen eine weiteres bevorzugte Ausführungsform der Erfindung, bei der das Milchansaugrohr (35) mit seiner Rohrachse (69) im Bereich des Anschlusses (68) an als Düsenkörper (48) ausgeführte Düsenanordnung (41) senkrecht zur Rohrachse des Milchschaumabführrohres (31) angeordnet und im Bereich des Anschlusses (68) mit einer als Öffnung (72) in der Wandung (70) des Milchansaugrohres (35) ausgeführten Luftdrossel (71) ausgerüstet ist. Weiterhin ist in einer besonderen Ausbildungsform der Erfindung ein Dampfrohr (61) an den Düsenkörper (48) angeschlossen, das die Verbindung zur als Festteil (16) ausgeführten Dampfdüse (2) herstellt. In dieser Ausbildungsform kömmt der Erfindungsgegenstand ohne zusätzliches Festteil (16) aus, das sozusagen in die Dampfzuleitung (1) oder - wie hier dargestellt in die Dampfdüse (2) integriert ist.

Das Wegwerfteil (26) ist mittels einer Rastnut (65) des Dampfrohres (61) an dem Rastring (4) der Dampfdüse (2) fixiert, wobei der Durchmesser D1 (67) nur geringfügig kleiner ist als D2 (63), und wobei die elastischen Eigenschaften des Dampfrohres (61) das Wegwerfteil (26) in Position halten.

**Fig. 8** zeigt zusätzlich zu Fig. 7 als besondere Ausführungsform der Erfindung eine hier als Rohrabschnitt ausgeführte Dichthülse (73) für die Öffnung (72), die durch Verschieben der Dichthülse (73), in anderer Ausbildungsform auch durch Drehen, geöffnet oder verschlossen werden kann, für um die Betriebsweise zwischen "Erwärmen + Schäumen" oder nur "Erwärmen" wählen zu können.

Die Fig. 1 bis Fig. 8 zeigen lediglich einzelne Ausführungsformen von vielen möglichen, die alle im Rahmen der Erfindung liegen sollen. Die dargestellten Ausführungsbeispiele der erfindungsgemäßen Vorrichtung (15) enthalten unterschiedliche Detailausführungen, die nicht auf die jeweils dargestellte Kombination beschränkt sondern austauschbar sein sollen. Dies betrifft besonders die Ausführung der Düsenanordnung (41) als Venturidüse (42) oder Freistrahldüse (44) durch einen Düsenkörper (48), einen dünnwandigen Rohrabschnitt (51) oder Einbeulungen (58).

Insgesamt schafft die Erfindung eine Vorrichtung (15) zum Aufschäumen von Milch mit externer Milchansaugung (35) als Zusatzeinrichtung zum Anschluss an die mit einer Dampfdüse (2) versehene Dampfzuleitung (1) von Cappuccino-Maschinen oder ähnlichen Haushaltmaschinen, deren Betrieb ohne aufwendige Reinigung möglich ist. Die vorgeschlagenen Ausführungsformen zeigen, dass eine einfache und kostengünstige Herstellung des Wegwerfteils (26) möglich ist, wobei die geringen Kosten, das geringe Gewicht, die für ein Wegwerfteil erforderliche umweltfreundliche Ausführung z.B. seinen täglichen Austausch gestatten. Die Herstellung der Rohre (31, 35, 61) und Rohrabschnitte (51, 54) und deren Durchmesserverengung (33), Ein/Ausbeulung (58), Profilieren in Wellprofilen (28) oder als Ringraum (52), Herstellung von öffnungen (53, 57, 72) und Beschneidungen (37 etc.) können weitgehend auf von der Trinkhalmherstellung her bekannten kostengünstigen Maschinen erfolgen.

### BEZUGSZEICHENLISTE

- 1: Dampfzuleitung
- 2: Dampfdüse
- 3: Düsenöffnung Dampfdüse
- 4: Rastring Dampfdüse
- 5: Rastnut Dampfdüse
- 6: Milchbehälter
- 7: Milch
- 8: Milchschaumbehälter
- 9: aufgeschäumte Milch
- 10: Dampfstrom
- 11: Milchstrom
- 12: Luftstrom
- 13: Milch-Luft-Strom
- 14: Milchschaumstrom
- 15: Vorrichtung zum Aufschäumen von Milch
- 16: Festteil
- 17: Rastnut Festteil
- 18: rohrförmige Ausbildung des Festteils
- 19: Klemmvorrichtung
- 20: Klemmbacke
- 21: Lager Klemmbacke
- 22: Klemmfeder
- 23: Luftführung Festteil
- 24: betätigbare Absperrung Luftführung
- 25: Lagerung Absperrung
- 26: Wegwerfteil
- 27: Kunststoffrohr
- 28: Wellprofil Rohr
- 29: Welle des Rohres
- 30: gewellte Rohrlänge
- 31: Milchschaumabführrohr
- 32: Abgabeöffnung
- 33: Verengung Abgabeöffnung
- 34: Mischraum vor Abgabeöffnung
- 35: Milchansaugrohr
- 36: Milcheintritt
- 37: Abschrägung Milcheintritt
- 38: Milchansaugleitung
- 39: Luftansaugleitung
- 40: Milch-Luft-Ansaugleitung
- 41: Düsenanordnung
- 42: Venturidüse
- 43: engste Stelle Venturidüse
- 44: Freistrahldüse
- 45: Freistrahl
- 46: Unterdruckraum
- 47: Wandung Unterdruckraum
- 48: Düsenkörper
- 49: Mischraum Düsenkörper
- 50: Ansaugöffnung aus Ringraum Düsenkörper
- 51: Rohrabschnitt mit Düsenanordnung
- 52: Ringraum um Rohrabschnitt
- 53: Ansaugöffnung aus Ringraum Rohrabschnitt
- 54: Mehrfach-Rohrabschnitt
- 55: Rohr des Mehrfach-Rohrabschnitts
- 56: gemeinsames Wandelement verbundener Rohre
- 57: Wandöffnung
- 58: Ein/Ausbeulungen am Mehrfachrohrabschnitt
- 59: Verstellorgan für Milchstrom
- 60: Geschmackspender
- 61: Dampfrohr
- 62: Dampfzutritt in Dampfrohr, Kunststoffrohr, Mehrfachrohr
- 63: Innendurchmesser D2 Dampfrohr, Kunststoffrohr, Mehrfachrohr
- 64: Rastring Dampfrohr, Kunststoffrohr, Mehrfachrohr
- 65: Rastnut Dampfrohr, Kunststoffrohr, Mehrfachrohr
- 66: Verstärkungsring Dampfrohr, Kunststoffrohr, Mehrfachrohr
- 67: Außendurchmesser Dampfdüse / Dampfzuleitung D1
- 68: Anschluss Milchansaugrohr an Düsenkörper
- 69: Rohrachse im Bereich des Anschlusses
- 70: Wandung Milchansaugrohr
- 71: Luftdrossel
- 72: Öffnung in Wandung Milchansaugrohr
- 73: Dichthülse

## Patentansprüche

1. Vorrichtung zum Aufschäumen von Milch mit externer Milchansaugleitung als Zusatzeinrichtung zum Anschluss an die mit einer Dampfdüse versehene Dampfzuleitung von Espresso-Maschinen oder ähnlichen Haushaltsmaschinen, wobei die Vorrichtung mit einer zur Erzeugung von Unterdruck in einem Unterdruckraum mittels Dampfströmung vorgesehenen Düsenanordnung ausgerüstet ist und getrennt oder gemeinsam geführte und mit dem Unterdruckraum verbundene Ansaugleitungen für Milch und Luft oder Milch-Luft-Gemisch und eine Abgabeöffnung zur Abgabe des erzeugten Dampf-Milch-Luft-Gemisches besitzt und die Milchansaugleitung in die zu behandelnde Milch eintauchbar ist, die sich in dem zur Aufnahme des Dampf-Milch-Luft-Gemisches vorgesehenen Behälter oder einem getrennten Behälter befindet, **dadurch gekennzeichnet, dass** die Vorrichtung (15) mindestens aus einem an die Dampfzuleitung (1) mit Dampfdüse (2) anschließbaren Festteil (16) und einem mit ihm leicht auswechselbar verbindbaren Wegwerfteil (26) zusammengesetzt ist, und das Wegwerfteil (26) mindestens aus einer im Bereich des Festteils (16) angeordneten Düsenanordnung (41) mit Unterdruckraum (46) und Ansaugleitungen (38, 39, 40) sowie einem Milchansaugrohr (35) und einem Milchschaumabführrohr (31) besteht, wobei zumindest beide Rohre (31, 35) im Wesentlichen als durch Strangpressen erzeugbare dünnwandige Kunststoffrohre (27) ausgebildet sind.

2. Vorrichtung nach Anspruch 1, **dadurch gekennzeichnet, dass** die Düsenanordnung (41) mit Unterdruckraum (46) und mindestens Teilen der Ansaugleitungen (38, 39, 40) von mindestens einem Düsenkörper (48) gebildet wird, an den zumindest das Milchansaugrohr (35) und die Milchschaumabführrohr (31) anschließbar sind.

3. Vorrichtung nach Anspruch 1, **dadurch gekennzeichnet, dass** die Düsenanordnung (41) mit Unterdruckraum (46) und mindestens Teilen der Ansaugleitungen (38, 39, 40) im Wesentlichen von einem durch Strangpressen erzeugbaren dünnwandigen Mehrfachrohrabschnitt (54) bestehend aus mindestens zwei achsparallel zueinander angeordneten und mit mindestens einem gemeinsamen Wandelement (56) miteinander verbundenen Kunststoffrohren (55) gebildet wird, wobei an eines der Rohre (55) zumindest das Milchansaugrohr (35) anschließbar ist, und ein anderes der Rohre (55) zumindest der Zuführung des Dampfstromes (10) und Abführung des Milchschaumstromes (14) dient.

4. Vorrichtung nach Anspruch 3, **dadurch gekennzeichnet, dass** die Düsenanordnung (41) mit Unterdruckraum (46) und mindestens Teilen der Ansaugleitungen (38, 39, 40) aus durch thermische Verformung erzeugbaren Ein- und Ausbeulungen (58) am Mehrfachrohrabschnitt (54) besteht.

5. Vorrichtung nach einem der Ansprüche 3 bis 4, **dadurch gekennzeichnet, dass** mindestens eines der gemeinsamen Wandelemente (56) der miteinander verbundenen Rohre (55) mit mindestens einer Wandöffnung (57) als Teil der Ansaugleitungen (38, 39, 40) versehen ist.

6. Vorrichtung nach Anspruch 3, **dadurch gekennzeichnet, dass** die Düsenanordnung (41) mit Unterdruckraum (46) und mindestens Teilen der Ansaugleitungen (38, 39, 40) aus einem durch Strangpressen und anschließende thermische Verformung erzeugbaren Rohrabschnitt (51) besteht, der in einem Rohr (55) des Mehrfachrohrabschnitts (54) an dessen Rohrwand anliegend befestigt ist und zu diesem Rohr (55) einen Ringraum (52) bildet.

7. Vorrichtung nach Anspruch 6, **dadurch gekennzeichnet, dass** mindestens eines der gemeinsamen Wandelemente (56) der miteinander verbundenen Rohre (55) mit mindestens einer Wandöffnung (57) als Teil der Ansaugleitungen (38, 39, 40) versehen, und eine Ansaugöffnung (53) aus dem Ringraum (52) zum Unterdruckraum (46) vorhanden ist.

8. Vorrichtung nach mindestens einem der vorhergehenden Ansprüche, **dadurch gekennzeichnet, dass** die Wandung des Milchansaugrohres (35) und/oder des Milchschaumabführrohres (31) und/oder des Mehrfachrohrabschnitts (54) zur Verbesserung der Verbindbarkeit mit dem Festteil (16) und/oder der Dampfdüse (2) bereichsweise mit einem Wellprofil (28) ausgeführt ist, das aus mindestens einer Welle (29) besteht.

9. Vorrichtung nach mindestens einem der vorhergehenden Ansprüche, **dadurch gekennzeichnet, dass** die Düsenanordnung (41) aus einer Venturidüse (42) besteht, deren engste Stelle (43) den Unterdruckraum (46) bildet.

10. Vorrichtung nach mindestens einem der Ansprüche 1 bis 8, **dadurch gekennzeichnet, dass** die Düsenanordnung (41) aus einer Freistrahldüse (44) besteht, die an den Unterdruckraum (46) angeschlossen ist, dem sie den Freistrahl (45) zuführbar macht.

11. Vorrichtung nach Anspruch 2, **dadurch gekennzeichnet, dass** der Düsenkörper (48) mit einem Mischraum (49) ausgestattet ist, in den die Milchansaugleitung (38) und Luftansaugleitung (39) münden und der über eine Milch-Luft-Ansaugleitung (39) mit dem Unterdruckraum (46) verbunden ist.

12. Vorrichtung nach mindestens einem der vorhergehenden Ansprüche, **dadurch gekennzeichnet, dass** das Festteil (16) an der die Dampfzuleitung (1) abschließenden Dampfdüse (2) fixierbar ist.

13. Vorrichtung nach mindestens einem der vorhergehenden Ansprüche, **dadurch gekennzeichnet, dass** das Wegwerfteil (26) auf mindestens eine rohrförmige Ausbildung (18) des Festteils (16) aufschiebbar und dort durch eine zum Austausch des Wegwerfteils (26) betätigbare Klemmvorrichtung (19) fixierbar ist.

14. Vorrichtung nach mindestens einem der vorhergehenden Ansprüche, **dadurch gekennzeichnet, dass** das Festteil (16) aus einem elastischen Werkstoff besteht und das Wegwerfteil (26) durch elastische Kräfte am Festteil (16) fixierbar macht.

15. Vorrichtung nach mindestens einem der vorhergehenden Ansprüche, **dadurch gekennzeichnet, dass** der Luftstrom (12) dem Wegwerfteil (26) über das Festteil (16) zuströmbar ist.

16. Vorrichtung nach mindestens einem der Ansprüche 1 bis 14, **dadurch gekennzeichnet, dass** der Luftstrom (12) dem Wegwerfteil (26) direkt zuströmbar ist.

17. Vorrichtung nach Anspruch 16, **dadurch gekennzeichnet, dass** der im Bereich des Anschlusses (68) des Milchansaugrohres (35) an die Düsenanordnung (41) in der Wandung (70) des Milchansaugrohres (35) eine Luftdrossel (71) angeordnet ist, über die der Luftstrom (12) dem Mischstrom (11) zuführbar ist.

18. Vorrichtung nach Anspruch 17, **dadurch gekennzeichnet, dass** die Luftdrossel (71) aus einer Öffnung (72) in der Wandung (70) besteht.

19. Vorrichtung nach Anspruch 18, **dadurch gekennzeichnet, dass** der Strömungsquerschnitt der Öffnung (72) einem Durchmesser von 0,3 mm bis 0,6 mm einer kreisförmig ausgebildeten Öffnung (72) entspricht.

20. Vorrichtung nach Anspruch 18 oder 19, **dadurch gekennzeichnet, dass** die Öffnung (72) durch thermische Verformung des Milchansaugrohres (35) herstellbar ist.

21. Vorrichtung nach einem oder mehreren der Ansprüche 15 bis 20, **dadurch gekennzeichnet, dass** der Luftstrom (12) in das Festteil (16) oder das Wegwerfteil (26) mittels einer betätigbaren Absperrung (24) absperrbar ist.

22. Vorrichtung nach Anspruch 18 und 21, **dadurch gekennzeichnet, dass** die Absperrung (24) als rohrförmige verschiebbare oder verdrehbare Dichthülse (73) ausgebildet ist, welche eine geringe Länge des Milchansaugrohres (35) umfasst und die Öffnung (72) in dessen Wandung (70) wahlweise offen oder geschlossen machen kann.

23. Vorrichtung nach einem oder mehreren der vorhergehenden Ansprüche, **dadurch gekennzeichnet, dass** die Rohrachse (69) im Bereich des Anschlusses (68) des Milchansaugrohres (35) an die Düsenanordnung (41) insbesondere an den Düsenkörper (48) parallel zur axialen Ausrichtung des Milchschaumabführrohres (31), also im Wesentlichen senkrecht angeordnet ist.

24. Vorrichtung nach einem oder mehreren der Ansprüche 1 bis 22, **dadurch gekennzeichnet, dass** die Rohrachse (69) des Anschlusses (68) des Milchansaugrohres (35) an die Düsenanordnung (41) insbesondere an den Düsenkörper (48) senkrecht zur axialen Ausrichtung des Milchschaumabführrohres (31), also im Wesentlichen horizontal angeordnet ist.

25. Vorrichtung nach mindestens einem der vorhergehenden Ansprüche, **dadurch gekennzeichnet, dass** das Milchansaugrohr (35) verstellbar und damit der Abstand zwischen seinem Milcheintritt (36) und der Abgabeöffnung (32) einstellbar ist.

26. Vorrichtung nach Anspruch 25, **dadurch gekennzeichnet, dass** das Milchansaugrohr (35) über eine oder mehrere Teillängen (30) mit einer Vielzahl von Wellen (29) eines Wellprofils (28) ausgestattet ist.

27. Vorrichtung nach mindestens einem der vorhergehenden Ansprüche, **dadurch gekennzeichnet, dass** das Milchschaumabführrohr (31) Teil eines Rohres (55) des Mehrfachrohrabschnitts (54) ist.

28. Vorrichtung nach mindestens einem der vorhergehenden Ansprüche, **dadurch gekennzeichnet, dass** der Milchstrom (11) oder der Milch-Luft-Strom (13) durch geeignete Maßnahmen mengenstrommäßig einstellbar ist.

29. Vorrichtung nach Anspruch 28, **dadurch gekennzeichnet, dass** der Milchstrom (11) über ein am Wegwerfteil (26) angeordnetes Verstellorgan (59) durch teilweise Abdeckung der einen Teil der Ansaugleitungen (38, 40) bildenden Wandöffnung (53, 57) einstellbar ist, wobei eine oder mehrere parallele Wandöffnungen (53, 57) vorhanden sind.

30. Vorrichtung nach Anspruch 29, **dadurch gekennzeichnet, dass** das Verstellorgan (59) in dem Rohr (55) des dünnwandigen Mehrfachrohrabschnitt (54) drehbar oder verschiebbar angeordnet ist, an das das Milchansaugrohr (35) angeschlossen ist.

31. Vorrichtung nach mindestens einem der vorhergehenden Ansprüche, **dadurch gekennzeichnet, dass** das Wegwerfteil (26) einen Geschmackspender (60) enthält, der vom Dampfstrom (10) und/oder dem Milchstrom (11) abtragbar ist, wodurch sich die in ihm gespeicherten Geschmackstoffe auf den Dampfstrom (10) und/oder den Milchstrom (11) und damit auf den Milchschaumstrom (14) übertragen.

32. Vorrichtung nach einem oder mehreren der vorhergehenden Ansprüche, **dadurch gekennzeichnet, dass** das Wegwerfteil (26) zusätzlich mit einem Dampfrohr (61) ausgerüstet ist, das am Düsenkörper (48) befestigt ist und diesem den Dampfstrom (10) von der Dampfzuleitung (1) oder Dampfdüse (2) zuführbar macht.

33. Vorrichtung nach einem oder mehreren der vorhergehenden Ansprüche, **dadurch gekennzeichnet, dass** das Festteil (16) von der Dampfzuleitung (1) bzw. der den Abschluss der Dampfzuleitung (1) bildendender Dampfdüse (2) gebildet ist, und dass das den Dampfstrom (10) der Düsenanordnung (41) zuführende Kunststoffrohr (27), insbesondere Dampfrohr (61) oder Mehrfachrohrabschnitt (54), an seinem oberen Dampfzutritt (62) eine Gestalt besitzt, die eine schnell herstellbare und wieder lösbare Verbindung mit der als Festteil (16) ausgebildeten Dampfzuleitung (1) bzw. mit der Dampfdüse (2) gestattet.

34. Vorrichtung nach Anspruch 33, **dadurch gekennzeichnet, dass** das den Dampfstrom (10) der Düsenanordnung (41) zuführende Kunststoffrohr (27), insbesondere Dampfrohr (61) oder Mehrfachrohrabschnitt (54), im Bereich seines Dampfzutrittes (62) einen Innendurchmesser D2 (63) besitzt, der annähernd dem Außendurchmesser D 1 (67) der als Festteil (16) ausgebildeten Dampfdüse (2) bzw. Dampfzuleitung (1) entspricht und das Kunststoffrohr (27,54,61) unter Nutzung seiner elastischen Dehnbarkeit an Dampfdüse (2) bzw. Dampfzuleitung (1) fixierbar macht.

35. Vorrichtung nach Anspruch 34, **dadurch gekennzeichnet, dass** das Kunststoffrohr (27,54,61) mit einer ringförmigen Rastnut (65) mit einem kennzeichnenden inneren Durchmesser größer als D2 (63) und Dampfdüse (2) bzw. Dampfzuleitung (1) mit einem Rastring (4) mit kennzeichnenden Außendurchmesser größer als D1 (67) versehen sind.

36. Vorrichtung nach Anspruch 34, **dadurch gekennzeichnet, dass** das Kunststoffrohr (27,54,61) mit einem ringförmigen Rastring (64) mit einem kennzeichnenden inneren Durchmesser kleiner als D2 (63) und Dampfdüse (2) bzw. Dampfzuleitung (1) mit einer Rastnut (5) mit kennzeichnenden Außendurchmesser kleiner als D1 (67) versehen sind

37. Vorrichtung nach mindestens einem der Ansprüche 33 bis 36, **dadurch gekennzeichnet, dass** das Kunststoffrohr (27,54,61) im Bereich des Anschlusses an Dampfdüse (2) bzw. Dampfzuleitung (1) auf den Innendurchmesser D2 (63) aufgeweitet ist, der annähernd dem Außendurchmesser D1 (67) der als Festteil (16) ausgebildeten Dampfzuleitung (1) bzw. Dampfdüse (2) entspricht.

38. Vorrichtung nach mindestens einem der Ansprüche 33 bis 37, **dadurch gekennzeichnet, dass** das Kunststoffrohr (27,54,61) im Bereich des Anschlusses an Dampfzuleitung (1) bzw. Dampfdüse (2) mit einem elastischen Verstärkungsring (66) versehen ist.

39. Vorrichtung nach Anspruch 31, **dadurch gekennzeichnet, dass** der Verstärkungsring (66) aus aushärtbarem Kunststoff in flüssiger Form auf die Innenseite und/oder Außenseite des Kunststoffrohres (27,54,61) aufbringbar ist.

## Claims

1. Device for foaming milk comprising an external milk suction line as an accessory for connecting to the steam supply line provided with a steam nozzle of espresso machines or similar domestic appliances, the device being equipped with a nozzle arrangement provided to generate a vacuum in a vacuum chamber by means of a steam flow, and having suction lines guided separately or together and connected to the vacuum chamber for milk and air or a milk-air mixture and a discharge opening for discharging the generated steam-milk-air mixture and the milk suction line being able to be immersed into the milk to be treated, which is located in the container provided for receiving the steam-milk-air mixture or a separate container, **characterised in that** the device (15) is made up of at least one fixed part (16) which may be connected to the steam supply line (1) with the steam nozzle (2) and a disposable part (26) which may be connected thereto in an easily replaceable manner, and the disposable part (26) consists of at least one nozzle arrangement (41), with the vacuum chamber (46) and the suction lines (38, 39, 40), arranged in the region of the fixed part (16) as well as a milk suction tube (35) and a milk foam discharge tube (31), at least both tubes (31, 35) being configured substantially as thin-walled plastics tubes (27) which may be produced by extrusion moulding.

2. Device according to Claim 1, **characterised in that** the nozzle arrangement (41) with the vacuum chamber (46) and at least parts of the suction lines (38, 39, 40) are formed by at least one nozzle body (48), to which at least the milk suction tube (35) and the milk foam discharge tube (31) may be connected.

3. Device according to Claim 1, **characterised in that** the nozzle arrangement (41) with the vacuum chamber (46) and at least parts of the suction lines (38, 39, 40) are formed substantially from a thin-walled multiple tube section (54) which may be produced by extrusion moulding, consisting of at least two plastics tubes (55) arranged axially parallel to one another and connected to one another by at least one common wall element (56), at least the milk suction tube (35) being able to be connected to one of the tubes (55), and a further tube (55) serving at least for supplying the steam flow (10) and discharging the milk foam flow (14).

4. Device according to Claim 3, **characterised in that** the nozzle arrangement (41) with the vacuum chamber (46) and at least parts of the suction lines (38, 39, 40) consist of indentations and bulges (58) on the multiple tube section (54) which may be produced by thermal deformation.

5. Device according to one of Claims 3 to 4, **characterised in that** at least one of the common wall elements (56) of the tubes (55) connected to one another, is provided with at least one wall opening (57) as part of the suction lines (38, 39, 40).

6. Device according to Claim 3, **characterised in that** the nozzle arrangement (41) with the vacuum chamber (46) and at least parts of the suction lines (38, 39, 40) consist of a tube section (51) which may be produced by extrusion moulding and subsequent thermal deformation, which is fastened in a tube (55) of the multiple tube section (54) bearing against the tube wall thereof and forms an annular space (52) with said tube (55).

7. Device according to Claim 6, **characterised in that** at least one of the common wall elements (56) of the tubes (55) connected to one another, is provided with at least one wall opening (57) as part of the suction lines (38, 39, 40) and a suction opening (53) from the annular space (52) is available for the vacuum chamber (46).

8. Device according to at least one of the preceding claims, **characterised in that** the wall of the milk suction tube (35) and/or of the milk foam discharge tube (31) and/or of the multiple tube section (54) is designed partially with a corrugated profile (28), which consists of at least one corrugation (29) for improving the ability to connect to the fixed part (16) and/or the steam nozzle (2).

9. Device according to at least one of the preceding claims, **characterised in that** the nozzle arrangement (41) consists of a Venturi nozzle (42), the narrowest point (43) thereof forming the vacuum chamber (46).

10. Device according to at least one of the Claims 1 to 8, **characterised in that** the nozzle arrangement (41) consists of an open jet nozzle (44), which is connected to the vacuum chamber (46) to which it makes the open jet (45) accessible.

11. Device according to Claim 2, **characterised in that** the nozzle body (48) is provided with a mixing chamber (49) into which the milk suction line (38) and air suction line (39) open and which is connected to the vacuum chamber (46) via a milk-air suction line (39).

12. Device according to at least one of the preceding claims, **characterised in that** the fixed part (16) may be fixed to the steam nozzle (2) terminating the steam supply line (1).

13. Device according to at least one of the preceding claims, **characterised in that** the disposable part (26) may be pushed onto at least one tubular formation (18) of the fixed part (16) and may be fixed there by a clamping device (19) which may be actuated for replacing the disposable part (26).

14. Device according to at least one of the preceding claims, **characterised in that** the fixed part (16) consists of a resilient material and the disposable part (26) may be fixed by resilient forces to the fixed part (16).

15. Device according to at least one of the preceding claims, **characterised in that** the air flow (12) may flow towards the disposable part (26) via the fixed part (16).

16. Device according to at least one of Claims 1 to 14, **characterised in that** the air flow (12) may flow directly towards the disposable part (26).

17. Device according to Claim 16, **characterised in that** in the region of the connection (68) of the milk suction tube (35) to the nozzle arrangement (41) in the wall (70) of the milk suction tube (35) an air-core choke (71) is arranged, via which the air flow (12) may be supplied to the mixing flow (11).

18. Device according to Claim 17, **characterised in that** the air-core choke (71) consists of an opening (72) in the wall (70).

19. Device according to Claim 18, **characterised in that** the flow cross section of the opening (72) corresponds to a diameter of 0.3 mm to 0.6 mm of an opening (72) of circular configuration.

20. Device according to Claim 18 or 19, **characterised in that** the opening (72) may be produced by thermal deformation of the milk suction tube (35).

21. Device according to one or more of Claims 15 to 20, **characterised in that** the air flow (12) into the fixed part (16) or the disposable part (26) may be shut off by means of an actuatable shut-off part (24).

22. Device according to Claim 18 and 21, **characterised in that** the shut-off part (24) is configured as a tubular displaceable or rotatable sealing sleeve (73), which has a shorter length than that of the milk suction tube (35), and may optionally open or close the opening (72) in the wall (70) thereof.

23. Device according to one or more of the preceding claims, **characterised in that** the tube axis (69) in the region of the connection (68) of the milk suction tube (35) to the nozzle arrangement (41), in particular to the nozzle body (48), is arranged parallel to the axial alignment of the milk foam discharge tube (31), i.e. substantially vertically.

24. Device according to one or more of Claims 1 to 22, **characterised in that** the tube axis (69) of the connection (68) of the milk suction tube (35) to the nozzle arrangement (41), in particular to the nozzle body (48), is arranged perpendicular to the axial alignment of the milk foam discharge tube (31), i.e. substantially horizontally.

25. Device according to at least one of the preceding claims, **characterised in that** the milk suction tube (35) may be adjusted and thus the distance between its milk inlet (36) and the discharge opening (32) may be set.

26. Device according to Claim 25, **characterised in that** the milk suction tube (35) is provided over one or more partial lengths (30) with a plurality of corrugations (29) of a corrugated profile (28).

27. Device according to at least one of the preceding claims, **characterised in that** the milk foam discharge tube (31) is part of a tube (55) of the multiple tube section (54).

28. Device according to at least one of the preceding claims, **characterised in that** the milk flow (11) or the milk-air flow (13) may be set according to the flow quantity by suitable measures.

29. Device according to Claim 28, **characterised in that** the milk flow (11) may be set via an adjusting member (59) arranged on the disposable part (26) by partially covering the wall opening (53, 57) forming part of the suction lines (38, 40), one or more parallel wall openings (53, 57) being present.

30. Device according to Claim 29, **characterised in that** the adjusting member (59) is arranged rotatably or displaceably in the tube (55) of the thin-walled multiple tube section (54), to which the milk suction tube (35) is connected.

31. Device according to at least one of the preceding claims, **characterised in that** the disposable part (26) contains a flavour dispenser (60) which may be dissolved by the steam flow (10) and/or the milk flow (11), whereby the flavours stored therein are transferred to the steam flow (10) and/or the milk flow (11) and thus to the milk foam flow (14).

32. Device according to one or more of the preceding claims, **characterised in that** the disposable part (26) is additionally provided with a steam tube (61) which is fastened to the nozzle body (48) and makes said nozzle body accessible to the steam flow (10) from the steam supply line (1) or the steam nozzle (2).

33. Device according to one or more of the preceding claims, **characterised in that** the fixed part (16) is formed by the steam supply line (1) and/or the steam nozzle (2) forming the connection of the steam supply line (1), and **in that** the plastics tube (27) supplying the steam flow (10) to the nozzle arrangement (41), in particular the steam tube (61) or multiple tube section (54), has a shape on its upper steam inlet (62) which permits a connection which may be rapidly formed and released again with the steam supply line (1) formed as a fixed part (16) and/or with the steam nozzle (2).

34. Device according to Claim 33, **characterised in that** the plastics tube (27) supplying the steam flow (10) to the nozzle arrangement (41), in particular the steam tube (61) or multiple tube section (54), in the region of its steam inlet (62) has an internal diameter D2 (63) which approximately corresponds to the external diameter D1 (67) of the steam nozzle (2) configured as a fixed part (16) and/or steam supply line (1) and permits the plastics tube (27, 54, 61) to be fixed to the steam nozzle (2) and/or steam supply line (1) by using its resilient expandability.

35. Device according to Claim 34, **characterised in that** the plastics tube (27, 54, 61) is provided with an annular detent groove (65) with a typical internal diameter which is greater than D2 (63) and the steam nozzle (2) and/or steam supply line (1) are provided with a detent ring (4) with a typical external diameter which is greater than D1 (67).

36. Device according to Claim 34, **characterised in that** the plastics tube (27, 54, 61) is provided with an annular detent ring (64) with a typical internal diameter which is smaller than D2 (63) and the steam nozzle (2) and/or steam supply line (1) are provided with a detent groove (5) with a typical external diameter which is smaller than D1 (67).

37. Device according to at least one of Claims 33 to 36, **characterised in that** the plastics tube (27, 54, 61) in the region of the connection to the steam nozzle (2) and/or steam supply line (1) is widened to the internal diameter D2 (63) which approximately corresponds to the external diameter D1 (67) of the steam supply line (1) and/or steam nozzle (2) formed as the fixed part (16).

38. Device according to at least one of Claims 33 to 37, **characterised in that** the plastics tube (27, 54, 61) in the region of the connection to the steam supply line (1) and/or steam nozzle (2) is provided with a resilient reinforcing ring (66).

39. Device according to Claim 31, **characterised in that** the reinforcing ring (66) made of curable plastics may be applied in liquid form to the inner face and/or outer face of the plastics tube (27, 54, 61).

## Revendications

1. Dispositif pour faire mousser du lait, doté d'une conduite externe d'aspiration de lait comme dispositif supplémentaire pour le raccordement à l'arrivée de vapeur, dotée d'une buse à vapeur, de machines expresso ou d'appareils ménager similaires, le dispositif étant équipé d'un agencement de buse prévu pour générer de la dépression dans un espace de dépression au moyen d'écoulement de vapeur et étant séparé ou possédant des conduites d'aspiration guidées conjointement et reliées à l'espace de dépression pour le lait et l'air ou le mélange lait-air et une ouverture de distribution pour la distribution du mélange vapeur-lait-air généré et la conduite d'aspiration de lait pouvant être plongée dans le lait à traiter, qui se trouve dans le réservoir prévu pour la réception du mélange vapeur-lait-air ou dans un réservoir séparé, **caractérisé en ce que** le dispositif (15) est composé au moins d'une partie fixe (16) pouvant être raccordée à l'arrivée de vapeur (1) avec buse à vapeur (2) et d'une partie jetable (26) pouvant être reliée de façon facilement amovible à la partie fixe, et la partie jetable (26) étant composée au moins d'un agencement de buse (41) disposé dans la zone de la partie fixe (16) avec espace de dépression (46) et conduites d'aspiration (38, 39, 40) et d'un tuyau d'aspiration de lait (35) et d'un tuyau d'évacuation de mousse de lait (31), au moins les deux tuyaux (31, 35) étant conçus sensiblement sous forme de tuyaux en matière plastique (27) à paroi mince pouvant être fabriqués par extrusion.

2. Dispositif selon la revendication 1, **caractérisé en ce que** l'agencement de buse (41) avec espace de dépression (46) et au moins des parties des conduites d'aspiration (38, 39, 40) est formé par au moins un corps de buse (48), auquel au moins le tuyau d'aspiration de lait (35) et le tuyau d'évacuation de mousse de lait (31) peuvent être raccordés.

3. Dispositif selon la revendication 1, **caractérisé en ce que** l'agencement de buse (41) avec espace de dépression (46) et au moins des parties des conduites d'aspiration (38, 39, 40) est formé essentiellement par une section de tuyau multiple (54) à paroi mince, pouvant être fabriquée par extrusion, constituée d'au moins deux tuyaux en matière plastique (55) disposés sur des axes parallèles entre eux et reliés entre eux par au moins un élément de paroi (56) commun, au moins le tuyau d'aspiration de lait (35) pouvant être raccordé à l'un des tuyaux (55), et un autre des tuyaux (55) servant au moins à l'arrivée du flux de vapeur (10) et à l'évacuation du flux de mousse de lait (14).

4. Dispositif selon la revendication 3, **caractérisé en ce que** l'agencement de buse (41) avec espace de dépression (46) et au moins des parties des conduites d'aspiration (38, 39, 40) est constitué par des voilements entrant et sortant (58) pouvant être générés par déformation thermique sur la partie de tuyau multiple (54).

5. Dispositif selon l'une quelconque des revendications 3 à 4, **caractérisé en ce qu'**au moins l'un des éléments de paroi (56) communs des tuyaux (55) reliés les uns aux autres est doté d'au moins une ouverture de paroi (57) comme partie des conduites d'aspiration (38, 39, 40).

6. Dispositif selon la revendication 3, **caractérisé en ce que** l'agencement de buse (41) avec espace de dépression (46) et au moins des parties des conduites d'aspiration (38, 39, 40) est constitué d'une partie tubulaire (51) pouvant être fabriquée par extrusion suivie d'une déformation thermique, qui est fixée dans un tuyau (55) de la partie de tuyau multiple (54) en s'appliquant sur sa paroi de tuyau et formant un espace annulaire (52) par rapport à ce tuyau (55).

7. Dispositif selon la revendication 6, **caractérisé en ce qu'**au moins l'un des éléments de paroi (56) communs des tuyaux (55) reliés les uns aux autres est doté d'au moins une ouverture de paroi (57) comme partie des conduites d'aspiration (38, 39, 40), et une ouverture d'aspiration (53) allant de l'espace annulaire (52) à l'espace de dépression (46) est présente.

8. Dispositif selon au moins l'une quelconque des revendications précédentes, **caractérisé en ce que** la paroi du tuyau d'aspiration de lait (35) et/ou du tuyau d'évacuation de mousse de lait (31) et/ou de la partie de tuyau multiple (54) est conçue, pour améliorer la possibilité de liaison avec la partie fixe (16) et/ou la buse à vapeur (2), par endroits avec un profil ondulé (28), qui comprend au moins une ondulation (29).

9. Dispositif selon au moins l'une quelconque des revendications précédentes, **caractérisé en ce que** l'agencement de buse (41) est constitué d'un tube de Venturi (42), dont l'endroit (43) le plus étroit forme l'espace de dépression (46).

10. Dispositif selon au moins l'une quelconque des revendications 1 à 8, **caractérisé en ce que** l'agencement de buse (41) est constitué d'une buse à jet libre (44), qui est raccordée à l'espace de dépression (46), auquel elle peut amener le jet libre (45).

11. Dispositif selon la revendication 2, **caractérisé en ce que** le corps de buse (48) est équipé d'un espace de mélange (49), dans lequel la conduite d'aspiration de lait (38) et la conduite d'aspiration d'air (39) débouchent, et est relié par une conduite d'aspiration de lait et d'air (39) à l'espace de dépression (46).

12. Dispositif selon au moins l'une quelconque des revendications précédentes, **caractérisé en ce que** la partie fixe (16) peut être fixée sur la buse à vapeur (2) terminant l'arrivée de vapeur (1).

13. Dispositif selon au moins l'une quelconque des revendications précédentes, **caractérisé en ce que** la partie jetable (26) peut être poussée sur au moins une réalisation tubulaire (18) de la partie fixe (16) et peut être fixée ici par un dispositif de serrage (19) pouvant être actionné pour le remplacement de la partie jetable (26).

14. Dispositif selon au moins l'une quelconque des revendications précédentes, **caractérisé en ce que** la partie fixe (16) est à base d'un matériau élastique et permet à la partie jetable (26) d'être fixée par des forces élastiques sur la partie fixe (16).

15. Dispositif selon au moins l'une quelconque des revendications précédentes, **caractérisé en ce que** le flux d'air (12) peut être amené à la partie jetable (26) au moyen de la partie fixe (16).

16. Dispositif selon au moins l'une quelconque des revendications 1 à 14, **caractérisé en ce que** le flux d'air (12) peut être amené directement à la partie jetable (26).

17. Dispositif selon la revendication 16, **caractérisé en ce qu'**un étranglement d'air (71), par lequel le flux d'air (12) peut être amené au flux de mélange (11), est disposé dans la zone du raccordement (68) du tuyau d'aspiration de lait (35) à l'agencement de buse (41) dans la paroi (70) du tuyau d'aspiration de lait (35).

18. Dispositif selon la revendication 17, **caractérisé en ce que** l'étranglement d'air (71) comprend une ouverture (72) dans la paroi (70).

19. Dispositif selon la revendication 18, **caractérisé en ce que** la section d'écoulement de l'ouverture (72) correspond à un diamètre de 0,3 mm à 0,6 mm d'une ouverture (72) conçue dans une forme circulaire.

20. Dispositif selon la revendication 18 ou 19, **caractérisé en ce que** l'ouverture (72) peut être fabriquée par la déformation thermique du tuyau d'aspiration de lait (35).

21. Dispositif selon l'une quelconque ou plusieurs des revendications 15 à 20, **caractérisé en ce que** le flux d'air (12) peut être bloqué dans la partie fixe (16) ou la partie jetable (26) au moyen d'une obturation (24) actionnable.

22. Dispositif selon les revendications 18 et 21, **caractérisé en ce que** l'obturation (24) est réalisée sous forme de douille étanche (73) de forme tubulaire, coulissante ou rotative, qui comporte une faible longueur du tuyau d'aspiration de lait (35) et permet au choix d'ouvrir ou de fermer l'ouverture (72) dans sa paroi (70).

23. Dispositif selon l'une quelconque ou plusieurs des revendications précédentes, **caractérisé en ce que** l'axe de tuyau (69) est disposé dans la zone du raccordement (68) du tuyau d'aspiration de lait (35) à l'agencement de buse (41), en particulier au corps de buse (48), parallèlement à l'orientation axiale du tuyau d'évacuation de mousse de lait (31), donc sensiblement verticalement.

24. Dispositif selon l'une quelconque ou plusieurs des revendications 1 à 22, **caractérisé en ce que** l'axe de tuyau (69) du raccordement (68) du tuyau d'aspiration de lait (35) à l'agencement de buse (41), en particulier au corps de buse (48), est disposé perpendiculairement à l'orientation axiale du tuyau d'évacuation de mousse de lait (31), donc sensiblement horizontalement.

25. Dispositif selon au moins l'une quelconque des revendications précédentes, **caractérisé en ce que** le tuyau d'aspiration de lait (35) est ajustable et donc l'espacement entre son entrée de lait (36) et l'ouverture de distribution (32) est réglable.

26. Dispositif selon la revendication 25, **caractérisé en ce que** le tuyau d'aspiration de lait (35) est équipé sur une ou plusieurs longueurs partielles (30) d'une pluralité d'ondulations (29) d'un profil ondulé (28).

27. Dispositif selon au moins l'une quelconque des revendications précédentes, **caractérisé en ce que** le tuyau d'évacuation de mousse de lait (31) fait partie d'un tuyau (55) de la section de tuyau multiple (54).

28. Dispositif selon au moins l'une quelconque des revendications précédentes, **caractérisé en ce que** le flux de lait (11) ou le flux de lait et d'air (13) peut être réglé au niveau du flux de quantité par des mesures appropriées.

29. Dispositif selon la revendication 28, **caractérisé en ce que** le flux de lait (11) est réglable au moyen d'un organe d'ajustage (59) disposé sur la partie jetable (26) par un revêtement partiel de l'ouverture de paroi (53, 57) formant une partie de conduites d'aspiration (38, 40), une ou plusieurs ouvertures de paroi (53, 57) parallèles étant présente (s) .

30. Dispositif selon la revendication 29, **caractérisé en ce que** l'organe d'ajustage (59) est disposé de façon rotative ou coulissante dans le tuyau (55) de la section de tuyau multiple (54) à paroi mince, tuyau auquel le tuyau d'aspiration de lait (35) est raccordé.

31. Dispositif selon au moins l'une quelconque des revendications précédentes, **caractérisé en ce que** la partie jetable (26) contient un distributeur de matière sapide (60), qui peut être enlevé du flux de vapeur (10) et/ou du flux de lait (11), les matières sapides stockées dans le distributeur se transmettant au flux de vapeur (10) et/ou au flux de lait (11) et donc au flux de mousse de lait (14).

32. Dispositif selon l'une quelconque ou plusieurs des revendications précédentes, **caractérisé en ce que** la partie jetable (26) est équipée en supplément d'un tuyau à vapeur (61), qui est fixé sur le corps de buse (48) et permet d'amener à ce corps le flux de vapeur (10) à partir de l'arrivée de vapeur (1) ou de la buse à vapeur (2).

33. Dispositif selon l'une quelconque ou plusieurs des revendications précédentes, **caractérisé en ce que** la partie fixe (16) est formée par l'arrivée de vapeur (1) ou la buse à vapeur (2) formant la terminaison de l'arrivée de vapeur (1), et **en ce que** le tuyau en matière plastique (27) amenant le flux de vapeur (10) à l'agencement de buse (41), en particulier le tuyau à vapeur (61) ou la section de tuyau multiple (54), présente sur son arrivée de vapeur supérieure (62) une forme qui permet une liaison pouvant être établie et à nouveau séparée rapidement avec l'arrivée de vapeur (1) réalisée sous forme de partie fixe (16) ou avec la buse vapeur (2).

34. Dispositif selon la revendication 33, **caractérisé en ce que** le tuyau en matière plastique (27) amenant le flux de vapeur (10) à l'agencement de buse (41), en particulier le tuyau à vapeur (61) ou la section de tuyau multiple (54), présente dans la zone de son arrivée de vapeur (62) un diamètre intérieur D2 (63), qui correspond approximativement au diamètre extérieur D1 (67) de la buse à vapeur (2) ou de l'arrivée de vapeur (1) réalisée sous forme de partie fixe (16) et permet de fixer le tuyau en matière plastique (27, 54, 61) en utilisant son extensibilité élastique sur la buse à vapeur (2) ou l'arrivée de vapeur (1).

35. Dispositif selon la revendication 34, **caractérisé en ce que** le tuyau en matière plastique (27, 54, 61) est doté d'une rainure d'encliquetage (65) de forme annulaire avec un diamètre intérieur caractéristique supérieur à D2 (63) et la buse à vapeur (2) ou l'arrivée de vapeur (1) d'une bague d'encliquetage (4) avec un diamètre extérieur caractéristique supérieur à D1 (67).

36. Dispositif selon la revendication 34, **caractérisé en ce que** le tuyau en matière plastique (27, 54, 61) est doté d'une bague d'encliquetage (64) de forme annulaire avec un diamètre intérieur caractéristique inférieur à D2 (63) et la buse à vapeur (2) ou l'arrivée de vapeur (1) d'une bague d'encliquetage (5) avec un diamètre extérieur caractéristique inférieur à D1 (67).

37. Dispositif selon l'une quelconque des revendications 33 à 36, **caractérisé en ce que** le tuyau en matière plastique (27, 54, 61) est élargi dans la zone du raccordement à la buse vapeur (2) ou l'arrivée de vapeur (1) au diamètre intérieur D2 (63), qui correspond approximativement au diamètre extérieur D1 (67) de l'arrivée de vapeur (1) ou de la buse vapeur (2) conçue comme partie fixe (16).

38. Dispositif selon au moins l'une quelconque des revendications 33 à 37, **caractérisé en ce que** le tuyau en matière plastique (27, 54, 61) est doté d'une bague de renfort (66) élastique dans la zone du raccordement à l'arrivée de vapeur (1) ou à la buse à vapeur (2).

39. Dispositif selon la revendication 31, **caractérisé en ce que** la bague de renfort (66) en matière plastique durcissable peut être appliquée sous forme liquide sur le côté intérieur et/ou le côté extérieur du tuyau en matière plastique (27, 54, 61).
